# FASCICULE DE BREVET EUROPEEN

(11) **EP 3 193 596 B1**
(45) Date de publication et mention de la délivrance du brevet: **20.05.2020**
(21) Numéro de dépôt: 15842994.4
(22) Date de dépôt: 15.09.2015
(51) Int. Cl.: A01N 43/38, A01N 25/00, A01N 37/00, A01N 47/28, A01N 59/08, A01N 59/16, A01P 13/02

(54) **UTILISATION DE L'ACIDE 4-CHLOROINDOLE-3-ACÉTIQUE POUR LE CONTRÔLE DE PLANTES INDÉSIRABLES**
VERWENDUNG VON 4-CHLORINDOL-3-ESSIGSÄURE ZUR BEKÄMPFUNG UNERWÜNSCHTER PFLANZEN
USE OF 4-CHLOROINDOLE-3-ACETIC ACID FOR CONTROLLING UNWANTED PLANTS

(30) Priorité: 16.09.2014 CA 2863477
(43) Date de publication de la demande: 26.07.2017
(73) Titulaire: Premier Tech Technologies Ltée, Riviere-du-Loup, QC G5R 6C1 (CA)
(72) Inventeur: TALBOT, Pierre, Rivière-du-Loup, Québec G5R 6C1 (CA); BELANGER, Alain, Rivière-du-Loup, Québec G5R 6C1 (CA); KANELLOS, George, Rivière-du-Loup, Québec G5R 6C1 (CA); PURCELL, Shaun, Rivière-du-Loup, Québec G5R 6C1 (CA); LEFEBVRE, Paul, Rivière-du-Loup, Québec G5R 6C1 (CA); ROY, Genevieve, Rivière-du-Loup, Québec G5R 6C1 (CA); LE QUERE, Dominique, Rivière-du-Loup, Québec G5R 6C1 (CA)
(74) Mandataire: Icosa
(86) Numéro de dépôt international: PCT/CA2015/050894
(87) Numéro de publication internationale: WO 2016/041071

(56) Documents cités:
- EP-A1- 1 997 376
- WO-A1-2012/032139
- WO-A1-2013/139753
- CN-A- 103 621 505
- ENGVILD, K. C.: '« Herbicidal activity of 4-chloroindoleacetic acid and other auxins on pea, barley and mustard »' PHYSIOLOGIA PLANTARUM vol. 96, 1996, pages 333 - 337, XP009185634

## Description

### Domaine de l'invention

Le domaine de l'invention porte sur un herbicide sélectif pour contrôler ou éliminer les mauvaises herbes tout en présentant peu ou pas d'impact sur les plantes désirables.

### État de la technique

Les herbicides auxiniques synthétiques ont été développés il y a une soixantaine d'années et ont contribué grandement aux changements des pratiques agricoles et horticoles. Ces molécules synthétiques, calquées sur les auxines endogènes, ou naturelles, trouvées dans les plantes, présentent la capacité de contrôler ou éliminer plusieurs mauvaises herbes, principalement à larges feuilles de type dicotylédone, sans trop affecter, généralement, les plantes de type monocotylédone, principalement les graminées. De nos jours, ce type d'herbicide est utilisé dans une grande variété de cultures et même dans des terrains non cultivés. Actuellement, les herbicides auxiniques synthétiques ont un rôle majeur dans la gestion des mauvaises herbes, qu'ils soient utilisés seuls ou bien avec d'autres herbicides ou produits. Leur faible coût de production et le large spectre de sélectivité développé au fil des années expliquent leur grand succès. En fait, les herbicides auxiniques synthétiques sont divisés en quatre classes en fonction de leur structure chimique. Ces quatre classes, réparties en différentes sous-ciasses intégrant plusieurs produits différents, permettent un contrôle sélectif de diverses espèces de mauvaises herbes dicotylédones trouvées dans le secteur de l'agriculture ainsi que dans le secteur de l'horticulture non-professionnelle tel que la gestion du gazon.

Le mode d'action des herbicides auxiniques synthétiques pour les espèces végétales sensibles est caractérisé par une croissance incontrôlée souvent décrite comme un "surdosage d'auxine". Le dosage appliqué provoque une variété d'anomalies ou perturbations métaboliques, évoluant au cours du temps jusqu'à la mort de la plante, la plupart du temps. Malgré leur large spectre d'utilisation au fil des ans, le mécanisme d'action exact n'est pas parfaitement connu compte tenu de la cascade de réactions qui affecte différentes voies biochimiques dans la plante.

Le 2,4-D, soit l'acide 2,4-dichlorophénoxyacétique, est l'un des herbicides auxiniques synthétiques les plus couramment utilisés. En fait, on le retrouve dans la formulation de plusieurs centaines de produits sur le marché, notamment ceux vendus pour le contrôle des mauvaises herbes dans les gazons. Au cours des deux dernières décennies, plusieurs études ont mis en évidence des risques pour l'environnement et la santé humaine découlant de l'utilisation de certains herbicides auxiniques synthétiques, notamment le 2,4-D. Face à cette situation, plusieurs pays ou territoires ont décidé de bannir l'utilisation du 2,4-D pour l'entretien des pelouses, à titre d'exemple, étant donné la proximité des résidences et les considérations purement esthétiques de cette pratique. Dans les régions où les herbicides auxiniques synthétiques sont interdits, ou dans les régions sans réglementation mais où les utilisateurs sont sensibilisés à la problématique, diverses solutions alternatives ont été développées ou étudiées. Cependant, il appert que celles-ci rencontrent jusqu'à maintenant un succès mitigé.

Le développement d'un nouvel herbicide sélectif à faible risque pour l'agriculture et l'horticulture présente plusieurs défis qui sont souvent de nature antagoniste ce qui complexifie grandement la démarche. D'une part, l'ingrédient actif utilisé doit être suffisamment stable pour résister à diverses conditions d'entreposage et d'application mais relativement facile à dégrader suite à son application pour éviter son accumulation dans l'environnement. D'autre part, l'ingrédient actif doit engendrer des symptômes rapides et manifestes susceptibles de réconforter l'utilisateur, notamment pour le secteur de l'horticulture amateur, sans mettre pour autant en péril l'effet à long terme recherché. En d'autres mots, la partie aérienne de la plante doit être clairement affectée sans pour autant nuire à la progression de la molécule ou du produit vers les racines afin d'assurer l'élimination permanente de la plante ciblée. Finalement, l'ingrédient actif doit affecter de façon irréversible le métabolisme des plantes nuisibles ou indésirables sans modifier, ou trop perturber, la croissance des plantes bénéfiques ou désirables, cultivées. En fait, l'efficacité d'un herbicide sélectif repose sur deux paramètres principaux, soit le contrôle de la mauvaise herbe à éliminer et la sélectivité de l'effet face aux plantes désirables. Ces deux paramètres sont influencés par divers facteurs liés à la plante elle-même, à l'environnement externe ainsi qu'à la nature de l'ingrédient actif.

En lien avec la plante, mentionnons, notamment:
- le port de la plante ou des feuilles (étalée vs érigée),
- la largeur et le découpage des feuilles,
- la position ou l'exposition du méristème,
- l'épaisseur de la cuticule des feuilles,
- la densité des trichomes sur les feuilles,
- l'âge de la plante,
- etc.

Du côté de l'environnement prévalant, on peut citer notamment :
- les conditions climatiques,
- la période de la saison de croissance,
- l'heure du jour,
- le type d'application (ciblée vs épandage)
- etc.

Du côté de la nature de l'ingrédient actif, il faut considérer, notamment :
- les voies de déplacement ou transport de la substance dans la plante,
- l'interaction avec les récepteurs protéiques de la plante,
- les mécanismes impliqués dans l'action de la substance
- le type de perturbations physiologiques engendrées,
- etc.

Aucune solution à faible risque environnemental proposée sur le marché au cours des dernières années ne rencontre l'ensemble des critères recherchés. Plusieurs alternatives sont présentées ici, à titre d'exemple, pour le secteur de l'entretien des pelouses. L'acide acétique peut tuer plusieurs espèces de mauvaises herbes mais le produit n'est pas assez sélectif. La concentration d'acide acétique à utiliser pour éliminer les plantes dicotylédones à feuilles larges et étalées, comme le pissenlit, affecte également les graminées à feuilles étroites érigées comme le gazon. Ce type de produit peut donc être vendu uniquement comme herbicide non sélectif. L'utilisation d'une solution aqueuse contenant de 8 à 20% de chlorure de sodium est aussi préconisée (US 6,372,690 B1) mais il appert que ce type de produit peut difficilement être utilisé pour des applications de type épandage. De plus, même en mode d'application de type ciblé, le produit peut faire jaunir le gazon et présenter un taux de repousse significatif sous certaines conditions climatiques. D'autres produits reposent sur l'utilisation de métaux comme le fer, sous forme de chélate en solution (US 6,972,273 B2). Pour dépasser le seul effet de la nécrose superficielle ou apparente, il faut systématiquement procéder à plusieurs applications. Une telle situation est incompatible avec des applications de type ciblé. Pour outrepasser cette difficulté, une autre invention combine une faible concentration d'herbicide auxinique synthétique, de type 2,4D, à un métal sous forme de chélate (US 8,076,267 B2). Bien que représentant un certain gain environnemental, cette stratégie ne permet toujours pas l'accès aux territoires, de plus en plus nombreux, où les herbicides auxiniques synthétiques sont bannis. De plus, il est à noter que les agents chélateurs les plus couramment utilisés dans les produits commerciaux de ce type, soit le acide éthylène diamine tétraacétique (EDTA) et l'hydroxyethylènediaminetriacétique (HEDTA), sont aussi pointés du doigt dans certaines études étant donné leur accumulation potentielle dans les sols. Des travaux ont également été effectués pour avoir recours à un surdosage d'acide indole-3-acétique (« indole acetic acid » en anglais) (IAA), une auxine végétale d'origine naturelle, pour le développement d'un herbicide sélectif. Cette auxine endogène a montré un effet de type herbicide sélectif mais celui-ci est de courte durée. La molécule serait métabolisée rapidement par la plante et/ou sa liaison avec les récepteurs protéiques engendrerait une trop faible action. D'autres travaux ont proposé l'utilisation d'herbicides à base d'auxines synthétiques ou naturelles, comme l'IAA, pour des plantes modifiées génétiquement suite à l'introduction d'un ou de gènes spécifiques bloquant la synthèse de l'éthylène (US 5,670,454). Ce type d'herbicide sélectif trouve une utilité restreinte puisque applicable uniquement à certaines plantes modifiées génétiquement. Finalement, il est à mentionner qu'il existe, sur les territoires où les herbicides auxiniques synthétiques sont interdits, diverses décoctions ou produits d'origine végétale présentant un effet limité comme le jus de betteraves et le gluten de maïs. Ces solutions partielles auraient un certain effet, suite à une accumulation en surface ou dans le sol, sur la germination des graines de mauvaises herbes dans un gazon déjà établi

Des travaux ont également été effectués avec une autre auxine endogène ou naturelle, possédant une action physiologique «auxinique» plus élevée que l'IAA, que l'on retrouve seulement dans quelques familles de plantes, soit l'acide 4-chloroindole-3-acétique (« 4-chloroindole-3-acetic acid » en anglais) (4CI-IAA). Cette molécule a été trouvée, par exemple, dans des pois à un stade donné du développement de la plante. Cependant, Engvild ("Herbicidal activity of 4- Indole acetic acid and other auxins on pea, barley and mustard", Physiol. Plant. 96 :333-337, 1996) a observé en laboratoire que le 4CI-IAA, dissous dans une solution aqueuse contenant 10% d'éthanol, affectait environ 4 fois moins la croissance de plantes de type dicotylédone (pois et moutarde) comparé au 2,4-D. À l'opposé, la plante de type monocotylédone étudiée (orge) présentait une sensibilité trois fois plus grande au 4CI-IAA toujours en comparaison du 2,4-D. En fait, une quantité de 0.17 g/m² de 4CI-IAA suffisait pour affecter de 50% la croissance de la plante monocotylédone (orge) contre 0.5 g/m² avec le 2,4-D. Des tendances similaires ont été observées au niveau de la mortalité exprimée en quantité létale pour 50% des plants (LD₅₀). De plus, l'étude a montré que, d'une plante dicotylédone à l'autre (pois vs moutarde), les quantités effectives variaient grandement, soit d'un facteur 5. L'ensemble de ces résultats ont mis en lumière une certaine capacité à affecter la végétation mais semblent incompatibles avec le développement d'un herbicide sélectif pouvant remplacer le 2,4-D. Finalement, une demande de brevet chinois (CN 103621505 A) a été déposée sur l'halogénation, en différentes positions du cycle de carbone, d'une molécule de IAA à des fins d'utilisation comme herbicide ayant des concentrations variant de 5 à 90 % sur une base poids ou 50 à 900 g/L. Considérant la faible solubilité aqueuse de ce type de molécule (pKa de l'ordre de 4), un herbicide contenant les concentrations préconisées dans la demande de brevet implique l'utilisation d'une forte teneur de solvant organique pouvant affecter les graminées plus sensibles et réduisant d'autant la sélectivité du produit. De plus, il est à souligner qu'un produit impliquant des concentrations aussi élevées peut engendrer des difficultés d'épandage selon les doses requises.

Donc, comme on peut le constater, il existe toujours un besoin pour un herbicide à faible risque, sélectif et efficace pouvant être utilisé pour des applications de types ciblé et/ou épandage dans les secteurs de l'horticulture, professionnelle ou amateur, et l'agriculture.

### Sommaire de l'invention

La présente invention concerne l'usage d'un sel de 4CI-IAA pour un contrôle sélectif de certaines mauvaises herbes.

Dans un autre aspect, l'invention utilise en outre un surfactant, un agent chélateur, un agent de conservation, un tampon ou une combinaison de ceux-ci

Par exemple, l'usage est décrit pour une application de type ciblé ou de type épandage.

Par exemple, l'usage est décrit pour une utilisation sous forme d'un liquide plus ou moins visqueux.

Par exemple, l'usage est décrit pour une utilisation sous forme d'un solide poudreux ou granulaire.

Par exemple, l'usage est décrit pour une utilisation sous forme d'un solide poudreux ou granulaire, optionnellement obtenu à partir d'une solution, ladite solution étant absorbée ou retenue sur une matrice solide ou sous forme d'un solide obtenu à partir d'une forme cristalline de 4CI-IAA mélangée à d'autres intrants solides plus ou moins actifs.

Par exemple, le sel de 4-CI-IAA est présent dans une concentration variant de 1.5 g/L à 40 g/L.

Par exemple, le sel de 4-CI-IAA est présent dans une concentration variant de 1 g/L à 40 g/L.

Par exemple, le sel de 4-CI-IAA est présent dans une concentration variant de 2 g/L à 10 g/L.

La présente invention concerne une utilisation impliquant en outre un co-ingrédient.

Par exemple, le co-ingrédient engendre des dommages apparents et rapides au niveau du feuillage et/ou de la tige et/ou de la fleur.

Par exemple, le co-ingrédient engendre une surdose de nutriments et/ou une toxicité métallique et/ou un choc osmotique et/ou toute autre perturbation métabolique visible.

Par exemple, le co-ingrédient est un métal, chélaté ou non, à une concentration variant de 0.1 à 5% sur une base de poids.

Par exemple, le co-ingrédient est du chlorure de sodium à une concentration variant de 1 à 36% sur une base de poids.

Par exemple, le co-ingrédient est de l'urée à une concentration variant de 1 à 50% sur une base de poids.

Par exemple, le co-ingrédient est un acide gras à une concentration variant de 1 à 20% sur une base de poids.

L'invention décrit un contrôle sélectif des mauvaises herbes.

L'invention décrit une application de type ciblé ou de type épandage.

L'invention décrit une application sous forme d'un liquide plus ou moins visqueux.

Par exemple, la composition utilisée est sous forme d'un solide poudreux ou granulaire.

Par exemple, la composition est sous forme d'un solide poudreux ou granulaire, optionnellement obtenu à partir d'une solution de 4CI-IAA ou de l'un de ses analogues, ou une combinaison de ceux-ci, sous forme d'acide, de sel ou d'ester, ladite solution étant absorbée ou retenue sur une matrice solide ou sous forme d'un solide obtenu à partir d'une forme cristalline de 4CI-IAA mélangée à d'autres intrants solides plus ou moins actifs.

Par exemple, le sel de 4-CI-IAA est présent dans une concentration variant de 1 g/L à 40 g/L.

Par exemple, le sel de 4-CI-IAA est présent dans une concentration variant de 1.5 g/L à 40 g/L.

Par exemple, le sel de 4-CI-IAA est présent dans une concentration variant de 2 g/L à 10 g/L.

Par exemple, le sel de 4-CI-IAA est utilisé à une dose supérieure ou égale 0.01 g/plant et inférieure ou égale à 0.1 g/plant pour une application de type ciblé.

Par exemple, le sel de 4-CI-IAA est utilisé à une dose supérieure ou égale 0.005 g/plant et inférieure ou égale à 0.1 g/plant lors d'une application de type ciblé.

Par exemple, le sel de 4-CI-IAA est utilisé à une dose supérieure ou égale 0.01 g/plant et inférieure ou égale à 0.05 g/plant lors d'une application de type ciblé.

Par exemple, le sel de 4-CI-IAA est utilisé à une dose supérieure ou égale 0.1 g/m² et inférieure ou égale à 1.0 g/m² pour une application de type épandage.

Par exemple, le sel de 4-CI-IAA utilisé à une dose supérieure ou égale 0.05 g/m² et inférieure ou égale à 1.0 g/m² lors d'une application de type épandage.

Par exemple, le sel de 4-CI-IAA est utilisé à une dose supérieure ou égale 0.2 g/m² et inférieure ou égale à 0.8 g/m² lors d'une application de type épandage.

Par exemple, l'usage de l'invention se fait en une, ou plusieurs applications à des doses similaires ou différentes.

Par exemple, la dose ciblée lors de l'usage de l'invention est obtenue suite à une ou plusieurs applications.

Par exemple, l'usage de l'invention est unique ou répété.

Par exemple, l'usage de sel de 4-CI-IAA est combiné à un surfactant, un agent chélateur, un agent de conservation, un tampon ou une combinaison de ceux-ci.

Par exemple, l'agent chélateur peut être choisi parmi l'acide diaminocyclohexanetetraacetique (CDTA), l'acide éthylènediaminedisuccinique (EDDS), EDTA, éthanoldiglycine (EDG), HEDTA, l'acide méthylglycinediacetique, l'acide glutamicadiacetique, l'acide trans-1,2-diaminocyclohexane-N,N,N',N'tetraacetique, l'acide diéthylènetriaminepentaacétique (DTPA), l'acide iminodisuccinique, les sels de ceux-ci (par exemple, les sels de sodium et de potassium), et les combinaisons de ceux-ci.

Par exemple, l'agent chélateur peut être choisi parmi HEDTA, EDTA, DTPA, EDDS, les sels de ceux-ci, et des combinaisons de ceux-ci.

Par exemple, l'agent chélateur est présent à une concentration d'environ 0.05 % à environ 5 % sur une base de poids.

Par exemple, l'agent chélateur est présent à une concentration d'environ 0.1 % à environ 3 % sur une base de poids.

Par exemple, le surfactant peut-être choisi parmi un surfactant de type anionique (comme par exemple les alkyles de sulfate, de sulfonate, de phosphate ou de carboxylates); de type cationique (comme par exemple des amines ou des ammoniums quaternaires); de type zwitterionic (comme par exemple le phosphatidylcholine); ou de type non-ionique (comme par exemple les alkyles de glycol, d'alcool, de glucoside, de glycérol, ainsi que les polysorbates et les Spans).

Selon l'invention, le 4CI-IAA est utilisé sous la forme d'un sel de potassium, un sel de sodium ou un sel d'amine.

### Définitions

Herbicide à faible risque : herbicide présentant des qualités inhérentes de toxicité nulle ou faible pour la santé et l'environnement.

**Mauvaises herbes** : plantes indésirables ou adventices que l'on veut éliminer pour diverses raisons, faisant partie, souvent, du groupe des dicotylédones pouvant présenter des morphologies foliaires diverses, notamment de larges feuilles comme le pissenlit et le plantain. Le tableau 1 énumère les mauvaises herbes selon l'invention.

**Tableau 1. Liste des de mauvaises herbes selon l'invention**

| **Nom latin** | **Nom commun** |
|---|---|
| *Arctium lappa* | Bardane |
| *Circium arvense* | Chardon |
| *Hieracium pilosella* | Épervière |
| *Leontodon autumnalis* | Léontodon |
| *Medicago lupulina* | Lupuline |
| *Taraxacum officinale* | Pissenlit |
| *Plantago sp.* | Plantain |
| *Potentilla reptans* | Potentille |
| *Trifolium repens* | Trèfle |
| *Tussilago farfara* | Tussilage |

**Plantes désirables** : plantes dont on favorise la reproduction et la croissance pour des raisons esthétiques et/ou économique faisant partie, souvent, du groupe des monocotylédones, notamment des graminées comme le gazon et le blé.

**Contrôle** : éradication des mauvaises herbes évaluée, après un temps donné, sur la base d'une cote de dommage apparent du feuillage, variant de 0 à 5, et/ou du pourcentage de mortalité observé sur les plants traités.

**Tableau 2: Évaluation de la capacité de contrôler les mauvaises herbes.**

| **Cote de dommage de la mauvaise herbe** | | | |
|---|---|---|---|
| **Valeur** | **Qualification de l'effet*** | **Description** | **Perception de l'utilisateur** |
| 0 à 0.9 | Absence | Aucune feuille n'est affectée | Non acceptable |
| 1 à 1.9 | Très léger | Effet à peine perceptible sur le feuillage | |
| 2 à 2.9 | Léger | Un certain nombre de feuilles sont clairement affectées | |
| 3 à 3.9 | Fort | Majorité des feuilles sont affectées entraînant une perte des fonctions chlorophylliennes | Acceptable |
| 4 à 4.9 | Très fort | Toutes les feuilles sont fortement affectées | Idéal |
| 5 | Mort ou apparence de mortalité | Toutes les parties visibles du plant sont mortes | |

| **Pourcentage de mortalité des plants de mauvaise herbe** | | | |
|---|---|---|---|
| 0 à 100 | % de plants morts p/r au nombre total de plants traités | La totalité des tissus sont affectés incluant ceux des racines de telle sorte que le plant est déjà mort ou sur le point de mourir | Préférablement 60% et plus Idéalement 80% et plus |

| | | | |
|---|---|---|---|
| * Effet : nécrose et/ou déformation et/ou dessèchement | | | |

**Sélectivité de l'effet:** absence d'un effet marqué de l'herbicide sur les plantes désirables évalué sur la base d'une cote d'impact sur ces dernières, variant de 0 à 3 dans le cas du gazon.

**Tableau 3: Évaluation de la sélectivité d'un herbicide par la cote d'impact sur le gazon**

| **Valeur** | **Qualification de l'effet*** | **Description** | **Perception de l'utilisateur** |
|---|---|---|---|
| 0 à 0.9 | Absence | Aucune feuille n'est affectée ou léger jaunissement difficile à discerner | Idéal |
| 1 à 2 | Moyen | Jaunissement discernable | Acceptable |
| 2.1 à 3 | Fort | Jaunissement très marqué | Non acceptable |

| | | | |
|---|---|---|---|
| *Effet : jaunissement et/ou dessèchement | | | |

**Application de type ciblé** : application d'un produit sur une plante donnée à l'aide d'un dispositif permettant de projeter un volume de liquide prédéterminé dans une zone circonscrite afin de réduire la quantité de produit à utiliser et l'effet potentielle sur les plantes en périphérie, notamment en horticulture amateur.

**Application de type épandage** : application d'un produit sur une superficie donnée de terrain couverte de plantes à l'aide d'un dispositif projetant un volume de liquide à un débit prédéterminé et où le dispositif peut être déplacé à une vitesse constante pour couvrir une surface plus grande, notamment en agriculture et en horticulture professionnelle.

**Dose** : quantité de produit, tel le 4 CI-IAA utilisée lors d'une application.

### Brève description des dessins

- Figure 1: Effet de la dose de 4CI-IAA sur le dommage au pissenlit évalué pour des applications de type ciblé;
- Figure 2: Effet de la dose de 4CI-IAA sur la mortalité du pissenlit pour des applications de type ciblé;
- Figure 3: Effet de la dose de 4CI-IAA sur la sélectivité face au gazon pour des applications de type ciblé;
- Figure 4: Effet de la concentration du 4CI-IAA sur le pissenlit pour des applications de type ciblé;
- Figure 5: Effet de la concentration du 4CI-IAA sur la bardane pour des applications de type ciblé;
- Figure 6: Effet de l'urée dans le temps comme co-ingrédient sur le contrôle du pissenlit pour des applications de type ciblé;
- Figure 7: Comparaison du fer, du manganèse, du sel et de l'urée comme co-ingrédient sur le pissenlit pour des applications de type ciblé;
- Figure 8: Comparaison de l'effet du 4CI-IAA avec d'autres auxines sur le pissenlit pour des applications de type ciblé;
- Figure 9: Effet d'une deuxième application de type ciblé sur le plantain pour différentes doses de 4CI-IAA;
- Figure 10: Effet de l'urée comme co-ingrédient pour des applications de type épandage à différentes doses de 4CI-IAA sur le pissenlit;
- Figure 11: Diminution de la présence de mauvaises herbes dans le gazon suite à une ou deux applications de type épandage de 4CI-IAA;

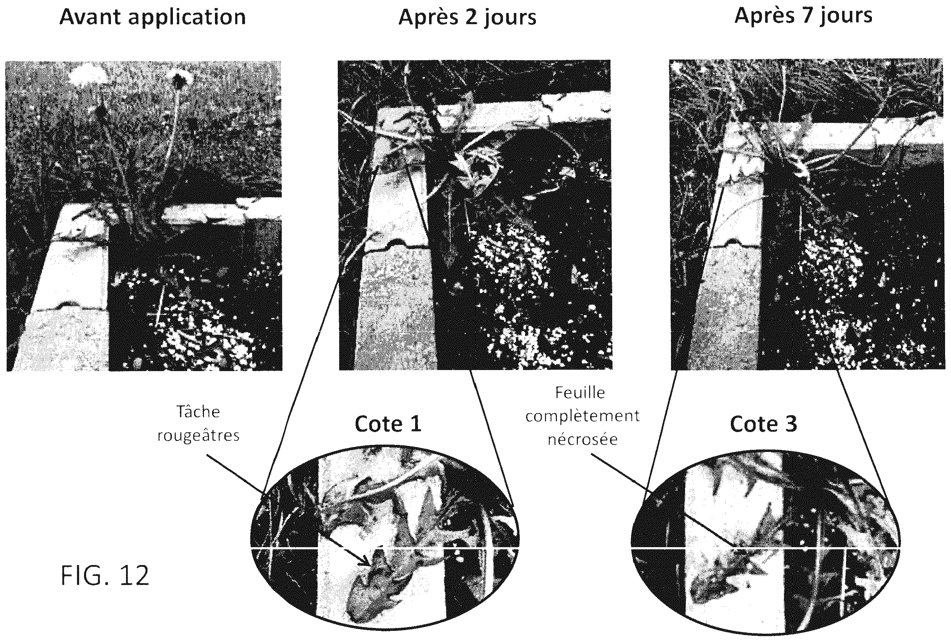

- Figure 12: Illustration de la cote de dommage sur le pissenlit pour une application de 4CI-IAA de type ciblé, sans co-ingrédient, après une période de 2 et 7 jours avec une dose de 0.03 g/plant;

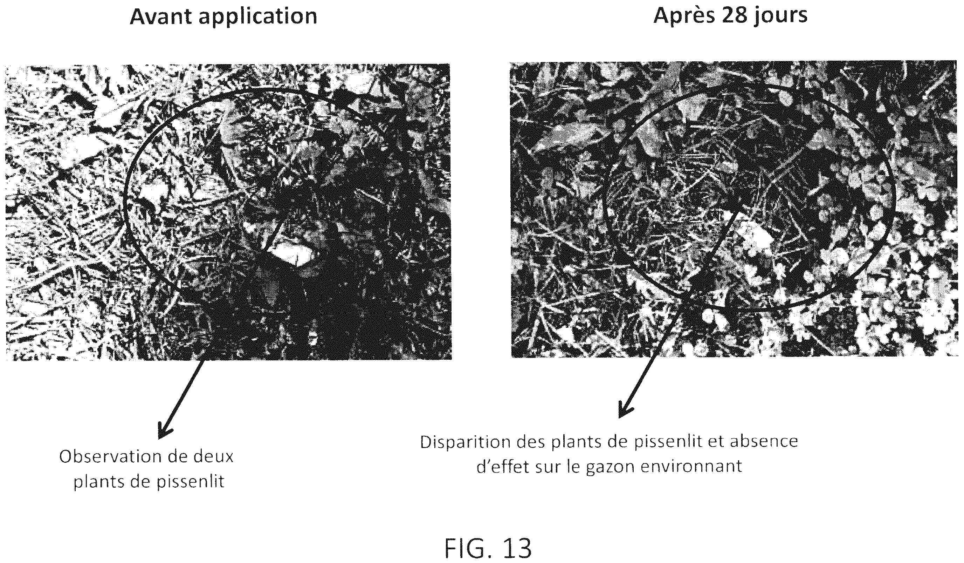

- Figure 13: Illustration de la disparition des pissenlits lors d'une application de 4CI-IAA de type ciblé, sans co-ingrédient, après une période de 28 jours avec une dose de 0.03 g/plant;

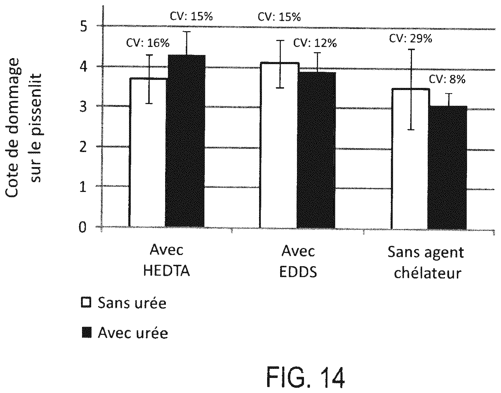

- Figure 14: Illustration de la cote de dommage sur le pissenlit pour une application de 4CI-IAA de type ciblé, sans et avec agents chélateurs (1%), 10 jours après le traitement avec une dose de 0.0075 g/plant; et

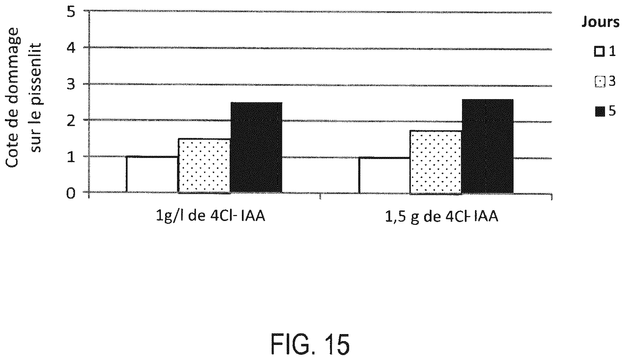

- Figure 15: Illustration de la cote de dommage sur le pissenlit pour une application de type ciblé, avec HEDTA (0.3 à 0.5 %) et des concentrations de 4CI-IAA de 1,0 et 1,5 g/l, sur une période de 1 à 5 jours.

### Description détaillée des modes de réalisation préférés

La présente invention consiste en l'utilisation de l'acide 4-chloroindole-3-acétique (4C1-IAA) sous la forme d'un sel de potassium, un sel de sodium ou un sel d'amine afin d'effectuer une éradication sélective d'au moins une mauvaise herbe choisie parmi le groupe constitué par bardane, chardon, épervière, léontodon, lupuline, pissenlit, plantain, potentille, trèfle et tussilage. La solution correspondante peut être utilisée sous forme d'un liquide, plus ou moins visqueux. De façon alternative, cette solution peut être absorbée ou retenue sur une matrice solide pour une utilisation sous la forme d'un solide poudreux ou granulaire. Dans un mode de réalisation, la solution est obtenue à partir d'eau et d'un sel de potassium, d'un sel de sodium ou d'un sel d'amine comme la triéthanolamine, l'éthylènediamine ou les oligoamines. Dans un autre mode de réalisation, la forme cristalline de 4CI-IAA peut être mélangée à d'autres intrants solides, plus ou moins actifs, pour être utilisée sous une forme poudreuse ou granulaire.

Le 4CI-IAA est une molécule d'origine naturelle qui montre peu ou pas de toxicité sur la santé et l'environnement, lui évitant d'être bannie pour son utilisation.

Il a été observé que des doses de 0.01 à 0.1 g/plant par application utilisée de manière ciblée sur le feuillage entraînait un dépérissement progressif pouvant s'étaler sur quelques semaines selon la saison de croissance, le type de mauvaise herbe, l'âge du plant et les conditions climatiques. Typiquement, les perturbations physiologiques provoquées par l'invention se manifestent par une épinastie, un flétrissement et/ou une courbure des feuilles et/ou de la tige et/ou des fleurs plus ou moins marqué après quelques heures, par un blocage de la croissance après 24 heures et l'apparition après 3 à 5 jours de tâches rougeâtres et/ou de chloroses, plus ou moins évidentes. Préférablement, les doses à appliquer se situent entre 0.02 et 0.08 g/plant et idéalement entre 0.03 et 0.06 g/plant. Il est intéressant de souligner qu'une solution de 4CI-IAA présente ultimement des capacités de contrôle du même ordre que celles observées avec un herbicide auxinique synthétique à base de 2,4-D. En prenant comme hypothèse qu'un pissenlit, à titre d'exemple, occupe une surface de 100 cm², correspondant à une zone plus ou moins carrée de 10 cm x 10 cm, on retrouverait 100 pissenlits sur une surface de 1 m². Si chaque pissenlit reçoit une dose de 0.01 g, à titre d'exemple, on applique 1 g sur la zone de 1m² entièrement couverte de pissenlits. Ainsi, il est possible d'exprimer en gramme par mètre carré les doses présentées précédemment en gramme par plant. Suite à cette transformation, les doses correspondantes sont donc de 1 à 10 g/m² pour des applications de type ciblé sur une surface complètement couverte de pissenlits.

L'efficacité d'un herbicide sélectif repose sur deux paramètres principaux, soit la capacité de contrôle des mauvaises herbes associée à la dose minimale applicable et la sélectivité de l'effet face aux plantes désirables. Ce dernier paramètre permet de déterminer la dose maximale applicable. À des doses inférieures à 0.01 g/plant, on observe des capacités de contrôle faibles et/ou trop de variabilité autour de cette capacité. Il est à noter que la capacité de contrôle s'exprime sous la forme d'une cote de dommage du feuillage allant de 1 à 5 et/ou d'un pourcentage de mortalité de la plante ciblée. La cote de dommage est utile pour évaluer la perception qu'a l'utilisateur de l'efficacité du produit puisque celle-ci est attribuée en fonction de l'apparence du feuillage externe. De son côté, le pourcentage de mortalité renseigne sur l'efficacité ultime du produit puisqu'il est calculé à partir du nombre de plants réellement morts ou disparus après un temps donné. Les agences d'homologation utilisent grandement cette dernière méthode d'évaluation. À titre d'exemple, un produit permettant un taux de mortalité de 80% des mauvaises herbes pourra avoir, sous certaines juridictions, la mention «supprime» sur son étiquette alors qu'un produit arborant un taux de 60% sera présenté comme « réprimant ». Ces nuances peuvent avoir un impact important sur le choix de l'herbicide par l'utilisateur averti.

En ce qui concerne les applications de type épandage, les doses se situent entre 0.1 g/m² et 1.0 g/m² par application. Préférablement, les doses à appliquer se retrouvent entre 0.3 et 0.8 g/m² et idéalement entre 0.4 et 0.6 g/m². Ces doses sont inférieures aux doses déterminées pour les applications de type ciblé qui varierait de 1 g/m² à 10 g/m² si la zone considérée était complètement couverte de pissenlit, soit 100 pissenlits recevant 0.01 et 0.1 g/plant. Cette quantité moindre de 4CI-IAA utilisée doit être analysée en fonction des deux paramètres retenus pour décrire l'efficacité d'un herbicide sélectif, soit la capacité de contrôle et la sélectivité de l'effet face aux plantes désirables. En fait, la réduction de la quantité est liée à l'aspect sélectivité, ou effet sur le gazon à titre d'exemple. Avec une application de type épandage, le produit est réparti de façon uniforme sur toute la surface traitée. Le gazon reçoit autant de produit que les mauvaises herbes contrairement à une application de type ciblé où le produit atteint majoritairement la mauvaise herbe. En fait, avec une application de type ciblé, la quantité de produit touchant le gazon provient le plus souvent d'un phénomène de dérive ou « drift » en anglais. Si les plantes désirables, comme le gazon par exemple, reçoivent la même dose que les mauvaises herbes, il faut réduire cette dose pour éliminer ou minimiser l'impact perçue sur ces plantes désirables. Il est clair que cette diminution de la dose aura certaines conséquences sur la capacité de contrôle des mauvaises herbes qui se traduit, notamment, par une apparition plus lente des dommages apparents. Dans le contexte d'une application de type épandage, ce décalage peut être toléré puisque l'utilisateur, le plus souvent un professionnel, est dans une dynamique de perception différente de celle prévalant dans un contexte d'application de type ciblé. Dans ce dernier cas, l'utilisateur est le plus souvent un consommateur avide de voir mourir la mauvaise herbe qui l'indispose. Autre fait important à mentionner, le jaunissement du gazon, lorsqu'observable, s'atténue et disparaît complètement avec le temps contrairement à la situation prévalant avec les mauvaises herbes qui évoluent inexorablement vers leur mort, ce qui met en lumière la sélectivité de la molécule aux doses établies. Dans le cas des mauvaises herbes à feuilles larges présentes dans le gazon, cette sélectivité reposerait donc, non seulement sur des différences morphologiques (port de la plante et position du méristème) responsables d'une absorption différentielle mais aussi, vraisemblablement, sur des réactions métaboliques différentes.

Par ailleurs, il a été observé que les différentes doses identifiées doivent être appliquées avec une solution présentant des concentrations supérieures ou égales à 1.5 g/L et inférieures à 40 g/L. Des solutions présentant des concentrations inférieures à 1.5 g/L engendrent une force motrice ou un gradient de concentration trop faible à la surface de la feuille. Une telle situation ralentit la pénétration du produit dans la feuille et, possiblement, son déplacement subséquent dans la plante ce qui aboutit à une capacité de contrôle moindre qui peut sembler moins attrayante pour certains utilisateurs. À l'autre extrême, une solution ayant une concentration supérieure à 40 g/L implique des volumes d'application trop réduits par les doses établies. À titre d'exemple, il faudrait appliquer 12.5 ml de produit ayant une concentration de 40 g/L sur un mètre carré pour une dose d'épandage de 0.5 g/m², ce qui s'avère difficile considérant les équipements existants. Pour une application de type ciblé avec une dose de 0.05 g/plant, il faudrait utiliser seulement 1.25 ml sur un plant présentant, à titre d'illustration, une surface de 100 cm², ce qui s'avère également difficile pour une application adéquate.

Autre fait à mentionner relié à l'invention, la dose de produit peut être appliquée une seule fois sur une zone donnée ou faire l'objet de plusieurs applications et ce, pour les deux types d'application considérés. Une telle flexibilité trouve son intérêt face à certaines mauvaises herbes plus rébarbatives dû à leur grosseur, par exemple. Dans la même optique comme discuté ci-haut, il peut être recommandable d'effectuer, à titre d'exemple, plusieurs applications de type épandage, plus ou moins espacées, lorsque la saison est plus sèche ou plus avancée et le gazon plus sensible. À titre d'illustration, la dose par application utilisée peut se retrouver dans la partie inférieure de la plage recommandée sous de telles conditions.

Il est important de souligner que le 4CI-IAA, comme d'autres auxines endogènes, est une molécule qui se déplace principalement dans la plante par transport polaire. Ce mode de transport est beaucoup plus lent que le transport non-polaire observé avec d'autres substances se déplaçant dans le xylème et le phloème. On parle de 5 à 20 cm/h pour le transport non-polaire comparé à un déplacement de 5 à 20 mm/h pour le transport polaire. Dans ce dernier cas, le déplacement se fait lentement mais de façon inexorable, de cellules à cellules, allant de la tige à la racine. Selon la littérature (Reemmer and Murphy 2014, Auxin and its Role in Plant Development, édition Springer, pages 75 à 100), les auxines synthétiques comme le 2,4-D et l'acide naphtalèneacétique (naphtalene-1-acetic acid ou NAA) se déplacent plus rapidement dans la plante que l'IAA et le 4CI-IAA. Cette situation explique donc la réponse plus lente observée en matière de contrôle des mauvaises herbes avec l'un des modes de réalisation de la présente invention par rapport à un herbicide auxinique synthétique et ce, même si, à terme, le résultat est comparable. Dans le cas d'un produit pour application de type ciblé contre le pissenlit destiné au marché du consommateur, à titre d'exemple, ce décalage dans la réponse peut représenter un désavantage par rapport à un herbicide auxinique synthétique ou conventionnel plus rapide. Pour pallier cette difficulté, la présente invention intègre dans l'un de ses modes de réalisation préféré un co-ingrédient se déplaçant moins lentement, par transport non-polaire à titre d'exemple, et pouvant occasionner rapidement une nécrose superficielle ou un dommage apparent plus ou moins permanent du feuillage et/ou de la tige. Plusieurs stratégies d'action peuvent être utilisées dans cette optique : dommages associés à un surdosage de nutriments, à un choc osmotique, à une toxicité liée à un métal chélaté ou non, et/ou à toute autre perturbation métabolique visible et survenant rapidement comme par exemple avec une autre auxine qui peut être d'origine synthétique (par exemple l'acide 2,4-dichlorophénoxyacétique (2,4-D) ou l'acide 3,6-dichloro-2-méthoxybenzoique (Dicamba)) ou d'origine naturelle (par exemple indole-3-acetic acid (IAA), indole-3-butyric acid (IBA), etc). À titre d'exemple, il est recommandé d'utiliser des concentrations, sur base poids, allant de 0.1 à 5% pour les métaux, comme le fer et le manganèse, chelatés ou pas (HEDTA ou EDTA par exemple), de 1 à 36% pour le chlorure de sodium ou le chlorate de manganèse, de 1 à 50%, de préférence 5-15%, pour l'urée et de 1 à 20% pour les acides gras, comme les acides carboxylique et phosphonique. Il est à noter que la perturbation entraînant un effet visible à court terme n'a pas besoin d'être permanente ou mortelle pour le plant car le 4CI-IAA prend le relais. À titre d'illustration, une solution contenant 0.45 % de 4CI-IAA combiné à 10% d'urée permet d'obtenir une cote de dommage de 3.4 après 3 jours alors qu'une solution de 4CI-IAA seule ne montre que peu d'effet après le même laps de temps. Il est à noter qu'après 35 jours, les deux solutions présentent une cote maximale de 5 pour le contrôle du pissenlit. Le même phénomène se manifeste avec des applications de type épandage.

Outre son efficacité dans les conditions décrites, l'invention présente d'autres avantages. La molécule 4CI-IAA peut être formulée avec divers agents de formulation dans le but de mieux adapter les propriétés du produit fini aux différents contextes d'application rencontrés. D'une part, des solutions tampons, des agents de conservation, comme le Proxel™, des surfactants, comme le Tween™, et des agents épaississants peuvent être ajoutés seul ou en combinaison, selon les besoins.

D'autre part, il est possible d'utiliser des agents chélateurs ou complexant dans le but de faciliter la pénétration de la molécule dans la plante. En effet, il pourrait être souhaitable de réduire la dose de 4CI-IAA appliquée et/ou la concentration de cette molécule dans le produit fini dans le contexte, par exemple, d'un gazon plus fragile ou d'un type donné de mauvaises herbes. Les différentes familles d'agents chélateurs ou complexant pouvant être utilisées sont, sans être limitatif, les acides de type carboxylique (par exemple les acides aminopolycarboxyliques, les acides carboxyliques aromatiques, les acides aliphatiques carboxyliques); les acides aminées, les acides hydroxycarboxyliques, les acides éthers carboxyliques) ainsi que les acides de type phosphonique. Il est à noter que ces produits peuvent être incorporés à la formulation sous forme d'acide ou de sel.

À titre d'illustration, l'ajout de hydroxyethylenediaminetriacétique (HEDTA) ou d'hydroxyethylenediaminedisuccinique (EDDS) a permis de réduire de moitié la dose minimale testée sans agent chélateur pour une formulation intégrant ou non un co-ingrédient. En fait, pour des doses de 0,0075 g par plant, il a été observé une augmentation intéressante de la cote de dommage sur le pissenlit (de 3.1 à 4.3) et une réduction de la variabilité des résultats observés exprimés sous forme de coefficient de variation (de 29 à 15%). Dans le même sens, il appert que les agents chélateurs permettent de réduire la concentration de 4CI-IAA dans la solution à des concentrations aussi faibles que 1 g par litre sans affecter l'efficacité recherchée. Par ailleurs, il est à noter que le produit peut être vendu sous forme concentrée et ensuite dilué lors de son utilisation ou application pour respecter les doses identifiées.

Des tests de dégradation au peroxyde ont démontré que le 4CI-IAA offre une certaine stabilité. En fait, un produit fini intégrant la molécule montre une stabilité supérieure à deux années pour un entreposage à température de la pièce. Fait intéressant, la littérature indique que la molécule peut être catabolisée par des bactéries du sol du type *Bradyrhizobium japonicum* via les mêmes voies métaboliques connues pour l'IAA (Jensen JB, Egsgaard H, Van Onckelen H, Jochimsen BU, Catabolism of indole-3-acetic acid and 4- and 5-chloroindole-3-acetic acid in Bradyrhizobium japonicum, 1995, J. Bacteriol. 177 (20) : 5762-6).

### Exemples

Les exemples suivant montrent l'efficacité d'un nouvel herbicide sélectif basé sur l'utilisation de la molécule 4CI-IAA selon certains modes de réalisation de la présente invention.

### Exemple 1

### Titre

### Efficacité du 4CI-IAA sur le dommage du pissenlit et sur la cote d'impact sur le gazon évalué pour des applications de type ciblé sous diverses conditions

### Méthodologie

Les expériences ont été réalisées selon des plans complètement aléatoires et des plans en blocs aléatoires complets avec des applications de type ciblé pour le contrôle du pissenlit sur divers terrains gazonnés.
Traitement : 4CI-IAA sans co-ingrédient
Variable dépendante : cote moyenne de dommage (de 0 à 5) sur les pissenlits et cote d'impact (de 0 à 3) sur le gazon évaluée après 7 et 40 jours.

Les résultats sont présentés aux Tableaux 4A et 4B qui démontrent l'efficacité du 4CI-IAA sur le dommage du pissenlit et la cote d'impact sur le gazon évalué pour des applications de type ciblé sous diverses conditions.

**Tableau 4A**

| | **Essai 1** | **Essai 2** | **Essai 3** |
|---|---|---|---|
| Dose IA* (g/plant) | 0.028 | 0.028 | 0.028 |
| Concentration IA (g/L) | 6 | 6 | 6 |
| Volume IA (ml/plant) | 4.8 à 7.2 | 36 à 4.8 | 3.6 à 6 |
| Nombre de plants | 20 | 20 | 20 |
| Province | *Alberta* | *Ontario* | *Québec* |
| Zone de rusticité | 3B | 5B | 4A |
| Année | 2013 | 2013 | 2013 |
| Période | Juillet à septembre | Juin à août | Juillet à septembre |
| Température moyenne journalière par mois | 13 à 15 | 17 à 18 | 14 à 21 |
| Pluviométrie cumulée (mm) | 84 | 246 | 388 |
| *Type de gazon* | Pâturin du Kentucky et fétuque | Dominance de pâturin du Kentucky | Mélange de diverses graminées |
| *Type* de terrain | Station expérimentale | Station expérimentale | Station expérimentale |
| Maintenance du terrain | Moyenne | Moyenne | Bonne |
| Cote du pissenlit après 7 jours | 2.4 | 2.6 | 3.1 |
| Cote du pissenlit après 40 jours | 5 | 4.1 | 4.3 |
| Cote du gazon après 7 jours | 0 | 0 | 1.4 |
| Cote du gazon après 40 jours | 0 | 0 | 0.75 |

**Tableau 4B**

| | **Essai 4** | **Essai 5** | **Essai 6** |
|---|---|---|---|
| Dose IA* (g/plant) | 0.032 | 0.032 | 0.032 |
| Concentration IA (g/L) | 6 | 4.5 | 4.5 |
| Volume IA (ml/plant) | 4.8 à 6 | 7.2 | 4.8 à 72 |
| Nombre de plants | 20 | 3 | 20 |
| Province | Québec | Québec | Alberta |
| Zone de rusticité | 4A | 4A | 3B |
| Année | 2013 | 2012 | 2012 |
| Période | Septembre | Septembre à octobre | Août à septembre |
| Température moyenne journalière par mois | 12 | 7 à 13 | 4 à 8 |
| Pluviométrie cumulée (mm) | 58 | 145 | 12 |
| Type de gazon | Inexistant | Mélange de diverses graminées | Pâturin du Kentucky et fétuque |
| Type de terrain | Terrain vague | Terrain commercial | Station expérimentale |
| Maintenance du terrain | Aucune | Faible | Moyenne |
| Cote du pissenlit après 7 jours | 3.3 | 3 | 1.5 |
| Cote du pissenlit après 40 jours | 4.4 | 4.5 | 4.7 |
| Cote du gazon après 7 jours | N.A. | 0.7 | 0 |
| Cote du gazon après 40 jours | N.A. | 0 | 0 |

### Interprétation

Le produit a montré des efficacités de contrôle du pissenlit et des impacts sur le gazon relativement constants malgré des conditions très variables (température journalière moyenne de 4 à 21 degrés Celsius, pluviométrie de 12 à 388 mm et zone de rusticité de 3B à 5B et saison de juin à octobre) et différents intervenants impliqués dans la prise données (évaluation de cotes subjectives). Il s'agit donc d'un produit robuste face à différentes conditions d'utilisation.

### Exemple 2

### Titre

### Effet de la dose de 4CI-IAA sur le contrôle du pissenlit évalué selon la cote de dommage pour des applications de type ciblé.

### Méthodologie

L'expérience a été réalisée selon un plan d'expérience en blocs aléatoires complets. Quatre répétitions ont été effectuées pour chaque traitement.
Traitement : 4CI-IAA sans co-ingrédient
Variable dépendante : cote moyenne de dommage (de 0 à 5) avec le coefficient de variation évaluée après 42 jours.

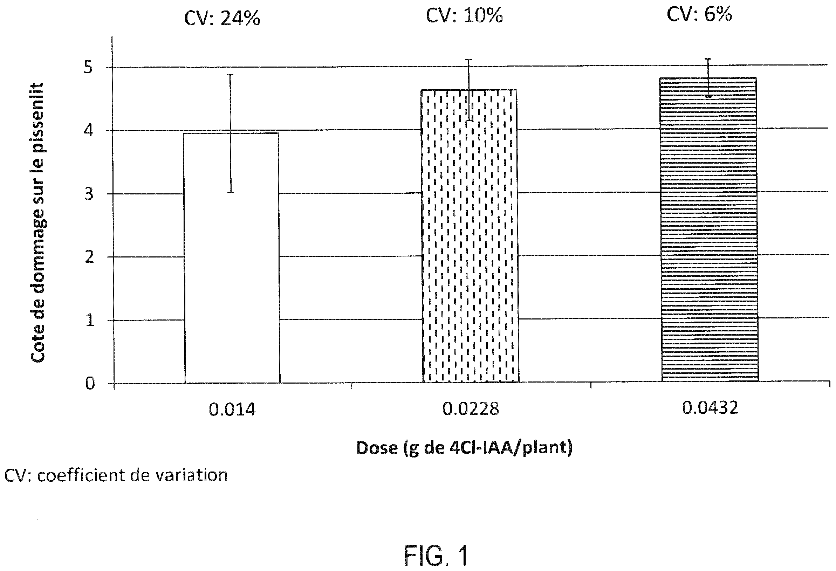

Les résultats sont présentés à la Figure 1.

### Interprétation

Cote de dommage de la mauvaise herbe = contrôle (perception de l'effet)
À des doses inférieures à 0.01 g/plant, la cote de dommage diminue et, surtout, la variabilité autour de cette dernière augmente grandement, ce qui donne un produit moins fiable.

### Exemple 3

### Titre

### Effet de la dose de 4 CI-IAA sur le contrôle du pissenlit évalué selon le pourcentage de mortalité pour des applications de type ciblé

### Méthodologie

L'expérience a été réalisée selon un plan d'expérience en blocs aléatoires complets. Quatre répétitions ont été effectuées pour chaque traitement.
Traitement : 4CI-IAA sans co-ingrédient
Variable dépendante : Pourcentage moyen de mortalité avec le coefficient de variation évalué après 42 jours

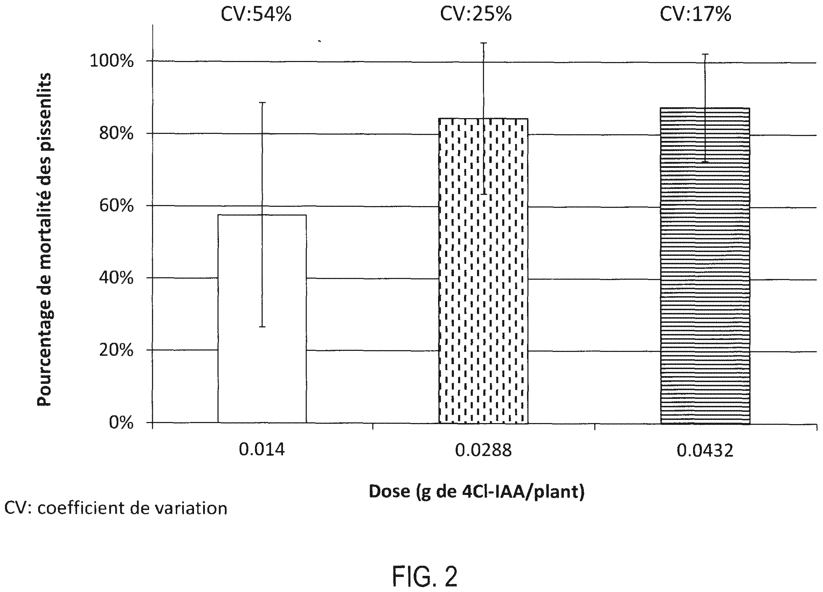

Les résultats sont présentés à la Figure 2.

### Interprétation

Pourcentage de mortalité de la mauvaise herbe = contrôle (effet ultime)
À des doses inférieures à 0.01 g/plant, le pourcentage de mortalité diminue de l'ordre de 50% (en bas du 60% correspondant à la mention « réprime » sur l'étiquette) et la variabilité autour de ce pourcentage augmente grandement ce qui donne un produit peu fiable.

### Exemple 4

### Titre

### Effet de la dose de 4CI-IAA sur la sélectivité du produit évaluée selon la cote d'impact sur le gazon pour des applications de type ciblé

### Méthodologie

L'expérience a été réalisée selon un plan d'expérience en blocs aléatoires complets. Cinq répétitions ont été effectuées pour chaque traitement.
Traitement : 4CI-IAA sans co-ingrédient
Variable dépendante : Cote d'impact (de 0 à 3) sur le gazon évaluée après 7 jours

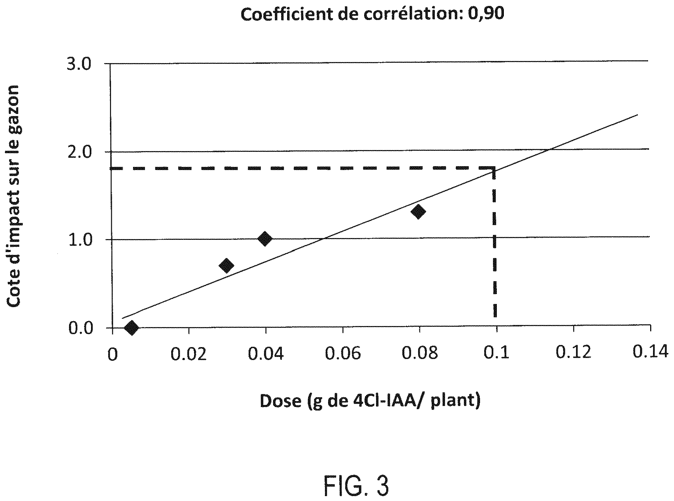

Les résultats sont présentés à la Figure 3.

### Interprétation

Cote d'impact sur le gazon = sélectivité
À des doses inférieures à 0.1 g/plant, l'impact sur le gazon va de nul à acceptable. Au-delà d'une dose de 0.1 g/plant, l'impact sur le gazon devient trop apparent et le risque de dépasser la cote acceptable augmente et ce, plus ou moins rapidement en fonction de la situation prévalant, notamment au niveau de l'état du gazon.

### Exemple 5

### Titre

### Effet de la concentration du 4CI-IAA sur le contrôle du pissenlit et de la bardane pour des applications de type ciblé

### Méthodologie

L'expérience a été réalisée selon un plan d'expérience en blocs aléatoires complets. Cinq répétitions ont été effectuées pour chaque traitement.
Traitement: 4CI-IAA sans co-ingrédient appliqué à une dose de 0.015 g/plant avec une concentration de 1.9 et de 7.5 g/L
Variable dépendante : cote moyenne de dommage (de 0 à 5)

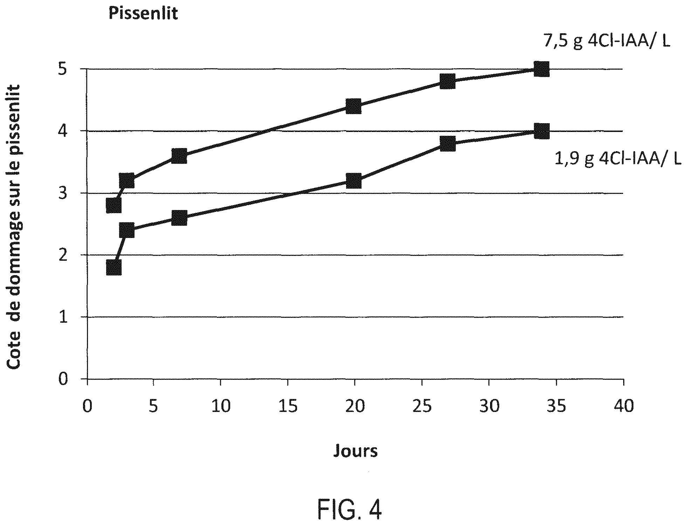

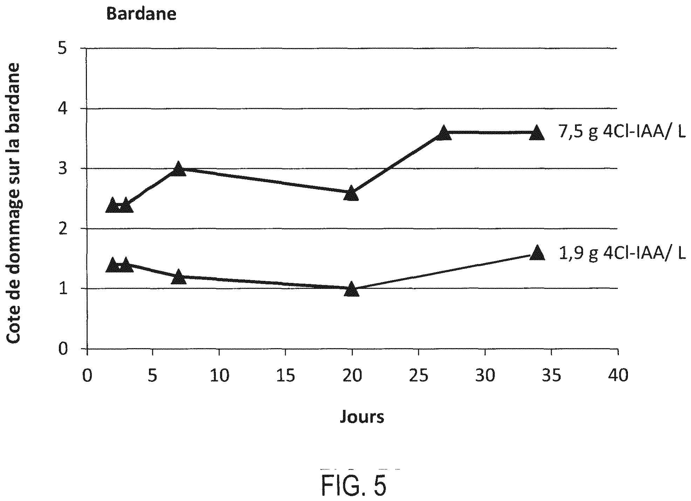

Les résultats sont présentés à la Figure 4 (pissenlit) et Figure 5 (bardane).

### Interprétation

Cote dommage de la mauvaise herbe = contrôle (perception de l'effet)
Avec des concentrations inférieures à 1.9 g/L, l'efficacité de contrôle des mauvaises herbes est trop ralentie et/ou trop réduite.

### Exemple 6

### Titre

### Effet de l'urée comme co-ingrédient du 4CI-IAA sur le contrôle du pissenlit pour des applications de type ciblé

### Méthodologie

L'expérience a été réalisée selon un plan d'expérience en blocs aléatoires complets. Quatre répétitions ont été effectuées pour chaque traitement.
Traitement : solution de 4CI-IAA appliquée à une dose de 0.03 g/plant contenant 10% d'urée comme co-ingrédient
Variable dépendante : cote moyenne de dommage (de 0 à 5)

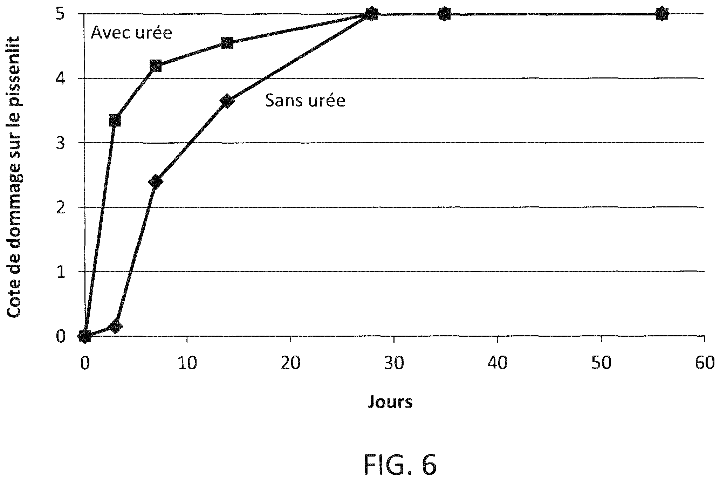

Les résultats sont présentés à la Figure 6.

### Interprétation

Cote dommage de la mauvaise herbe = contrôle (perception de l'effet)
L'ajout de 10% d'urée, comme co-ingrédient, accélère l'efficacité de contrôle du pissenlit perçue par l'utilisateur et ce, particulièrement au cours des 72 premières heures. Après 30 jours les deux formulations se rejoignent en matière d'efficacité.

### Exemple 7

### Titre

### Effet du fer, du manganèse, du sel et de l'urée, comme co-ingrédient(s) sur le contrôle du pissenlit pour des applications de type ciblé

### Méthodologie

L'expérience a été réalisée selon un plan d'expérience en blocs aléatoires complets. Quatre répétitions ont été effectuées pour chaque traitement sauf pour le chélate de fer où trois répétitions ont été réalisées.
Traitement : solutions de 4CI-IAA appliquées à des doses de 0.02 à 0.03 g/plant contenant 10% d'urée ou 6% de chlorure de sodium ou 0,24% de chélate (HEDTA) de fer ou 0,1% de chélate (HEDTA) de manganèse comme co-ingrédient
Variable dépendante : cote moyenne de dommage (de 0 à 5) évaluée après 7 jours

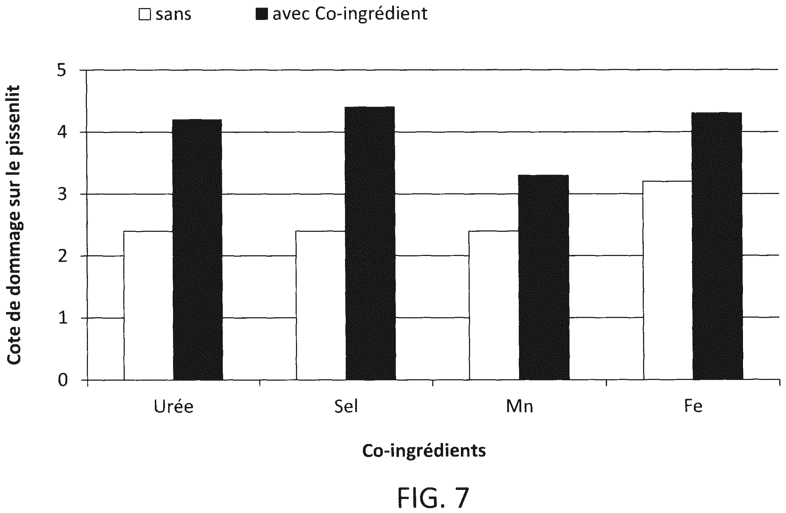

Les résultats sont présentés à la Figure 7.

### Interprétation

Cote dommage de la mauvaise herbe = contrôle (perception de l'effet)
Les trois types de co-ingrédients ont accéléré de façon marquée l'efficacité de contrôle perçue par l'utilisateur.

### Exemple 8

### Titre

### Comparaison de l'effet du 4CI-IAA avec d'autres auxines sur le contrôle du pissenlit pour des applications de type ciblé

### Méthodologie

L'expérience a été réalisée selon un plan d'expérience en blocs aléatoires complets. Quatre répétitions ont été effectuées pour chaque traitement sauf pour le 4CI-IAA ester de méthyle où 3 répétitions ont été réalisées.
Traitement : les quantités appliquées variaient de 0.014 à 0.036 g/plant sauf pour l'IAA où la quantité était plus élevée (0.2 g/plant) étant donné l'information trouvée dans la littérature sur l'effet de cette dernière
Variable dépendante : cote moyenne de dommage (de 0 à 5) et pourcentage moyen de mortalité évalués entre 28 et 35 jours après l'application

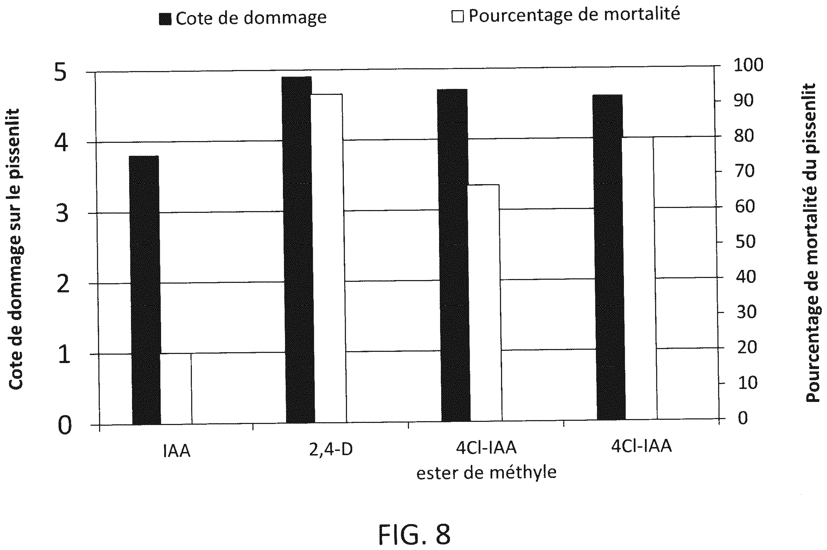

Les résultats sont présentés à la Figure 8.

### Interprétation

Cote dommage de la mauvaise herbe = contrôle (perception de l'effet)
Pourcentage de mortalité de la mauvaise herbe = contrôle (effet ultime)
Le 4CI-IAA ainsi que son ester de méthyle montrent des efficacités de contrôle près de celle observées avec un herbicide à base de 2,4-D. Il est possible que l'ester de méthyle de 4CI-IAA soit transformé en 4CI-IAA dans la plante.. L'utilisation de l'IAA montre une cote de dommage intéressante mais un pourcentage de mortalité faible et ce, pour une quantité plus élevée. Ce dernier résultat indique une métabolisation de la molécule par la plante ou une action plus faible de la molécule sur la plante permettant la repousse des feuilles et/ou survie du plant.

### Exemple 9

### Titre

### Effet d'une deuxième application de type ciblé sur le contrôle du plantain pour différentes doses de 4CI-IAA

### Méthodologie

L'expérience a été réalisée selon un plan d'expérience en blocs aléatoires complets. Quatre répétitions ont été effectuées pour chaque traitement.
Traitement : 4 CI-IAA sans co-ingrédient selon trois doses, soit 0,015, 0,023 et 0,030 g/pant
Variable dépendante : pourcentage moyen de mortalité

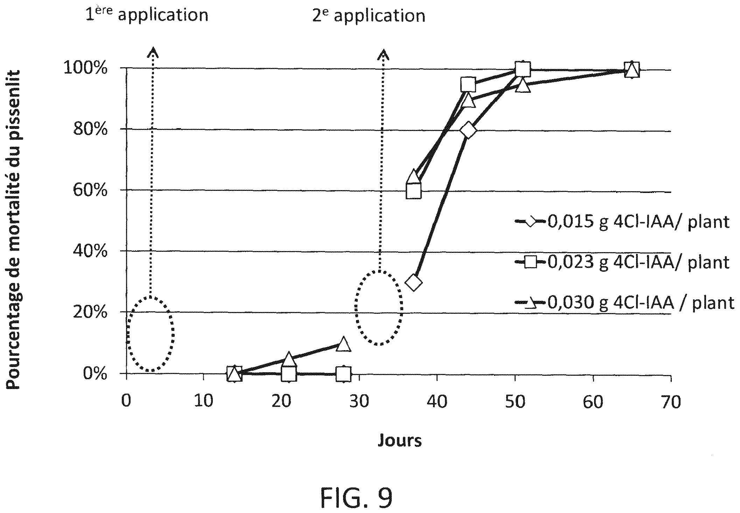

Les résultats sont présentés à la Figure 9.

### Interprétation

Pourcentage de mortalité de la mauvaise herbe = contrôle (effet ultime)
Sous certaines conditions d'utilisation, une deuxième application peut améliorer de façon marquée l'efficacité de contrôle. De plus, il appert que deux applications de 0.015 g/plant pourraient être plus efficaces qu'une application de 0.030 g/plant.

### Exemple 10

### Titre

### Espèces de mauvaises herbes étudiées et pouvant être contrôlées avec des applications de 4CI-IAA de type ciblé

### Méthodologie

Les expériences ont été réalisées selon des plans complètement aléatoires et des plans en blocs aléatoires complets avec des applications de type ciblé pour le contrôle des mauvaises herbes sur divers terrains gazonnés.
Traitement : 4 CL-IAA sans co-ingrédient avec des doses variant de 0,022 à 0,036 g/ plant
Variables : Observation d'une cote de dommage supérieure à 4 et d'un pourcentage de mortalité supérieur à 80% évalués après une période allant de 21 à 40 jours, selon l'espèce.

**Tableau 5. Morphologie foliaire de différentes mauvaises herbes appartenant aux dicotylédones.**

| **Nom latin** | **Nom commun** | **Morphologie de la feuille** | | |
|---|---|---|---|---|
| | | **Densité des trichomes** | **Épaisseur de la cuticule** | **Type de limbe foliaire** |
| *Arctium lappa* | Bardane | Forte | Faible | Entier |
| *Circium arvense* | Chardon | Faible | Moyenne | Entier |
| *Hieracium pilosella* | Épervière | Forte | Faible | Entier |
| *Leontodon autumnalis* | Léontodon | Forte | Moyenne | Entier |
| *Medicago lupulina* | Lupuline | Forte | Faible | Segmenté |
| *Taraxacum officinale* | Pissenlit | Faible | Moyenne | Entier |
| *Plantago sp.* | Plantain | Faible | Forte | Entier |
| *Potentilla reptans* | Potentille | Moyenne | Moyenne | Segmenté |
| *Trifolium repens* | Trèfle | Forte | Faible | Segmenté |
| *Tussilago farfara* | Tussilage | Forte | Moyenne | Entier |

### Interprétation

Cote de dommage sur la mauvaise herbe = contrôle (perception de l'effet)
Pourcentage de mortalité de la mauvaise herbe = contrôle (effet ultime)
Avec des doses du même ordre, le 4CI-IAA permet de contrôler plusieurs espèces de mauvaises herbes appartenant aux dicotylédones et présentant diverses morphologies foliaires susceptibles d'influencer l'absorption d'une substance. Il s'agit donc d'un produit versatile fonctionnant avec différentes espèces de mauvaises herbes.

### Exemple 11

### Titre

### Effet de la dose de 4CI-IAA sur le contrôle du pissenlit et la sélectivité du produit pour des applications de type épandage

### Méthodologie

L'expérience a été réalisée selon un plan d'expérience en blocs aléatoires complets. Trois répétitions ont été effectuées pour chaque traitement avec des surfaces de 0.5m².
Traitement : 4CI-IAA sans co-ingrédient avec un taux d'application de 100 ml/m²
Variable dépendante : cote moyenne de dommage (de 0 à 5) du pissenlit et cote moyenne d'impact (de 0 à 3) sur le gazon évaluée après 50 jours

**Tableau 6. Effet de la dose de 4CI-IAA sur le contrôle du pissenlit**

| | | | | |
|---|---|---|---|---|
| Dose (g/m²) | 1.2 | 1.0 | 0.6 | 0.3 |
| Cote de dommage du pissenlit | 3.9 | 3.8 | 4.1 | 3.0 |
| Cote d'impact sur le gazon | 2.0 | 1.7 | 1.7 | 0.7 |

### Interprétation

Cote dommage sur la mauvaise herbe = contrôle (perception de l'effet)
Cote d'impact du gazon = sélectivité
Une dose de 4CI-IAA de 1.2 g/m² et plus risque de trop d'affecter le gazon et une dose de 0.3 g/m² montre une efficacité de contrôle toujours acceptable.

### Exemple 12

### Titre

### Effet de la dose dans le temps sur la sélectivité du produit et la repousse du gazon pour des applications de 4CI-IAA de type épandage

### Méthodologie

L'expérience a été réalisée selon un plan d'expérience complètement aléatoire avec des surfaces de 2m² par traitement.
Traitement : 4CI-IAA sans co-ingrédient avec un taux d'application de 100 ml/m²
Variable dépendante : cote d'impact (de 0 à 3) sur le gazon évaluée après 4 et 90 jours

**Tableau 7. Effet à 4 ou 90 jours d'une application de 4CI-IAA**

| | | | | | |
|---|---|---|---|---|---|
| Dose (g/m²) | 1.2 | 1.0 | 0.9 | 0.6 | 0.25 |
| Après 4 jours | 3 | 2 | 1 | 1 | 0 |
| Après 90 jours | 0 | 0 | 0 | 0 | 0 |

### Interprétation

Cote dommage sur la mauvaise herbe = contrôle (perception de l'effet)
Même très affecté, le gazon récupère bien et redevient vert après 90 jours contrairement aux mauvaises herbes qui évoluent inexorablement vers leur mort.

### Exemple 13

### Titre

### Effet de l'urée comme co-ingrédient sur le contrôle du pissenlit pour des applications de type épandage à différentes doses

### Méthodologie

L'expérience a été réalisée selon un plan d'expérience en blocs aléatoires complets. Trois répétitions ont été effectuées pour chaque traitement.
Traitement: 4CI-IAA avec 10% d'urée et sans urée appliqué avec un taux d'épandage de 100 ml/m² à des doses de 0.3, 0.6 et 0.9 g/m²
Variable dépendante : cote moyenne de dommage (de 0 à 5) du pissenlit évaluée après 2 jours

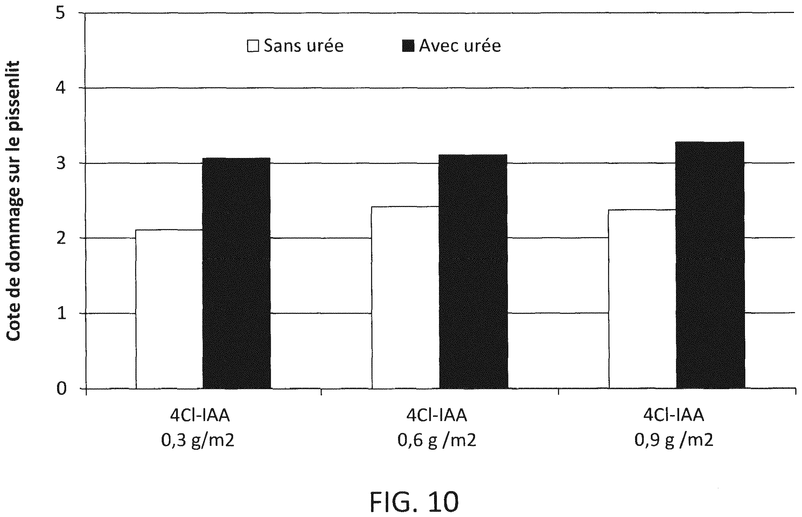

Les résultats sont présentés à la Figure 10.

### Interprétation

Cote de dommage du pissenlit = contrôle
L'ajout de 10% d'urée comme co-ingrédient accélère l'efficacité de contrôle du pissenlit perçue par l'utilisateur après 48 heures. Pour les trois doses étudiées, l'effet de l'urée est sensiblement le même.

### Exemple 14

### Titre

### Diminution de la présence de mauvaises herbes dans le gazon suite à une ou deux applications de type épandage de 4CI-IAA

### Méthodologie

L'expérience a été réalisée selon un plan d'expérience en blocs aléatoires complets. Trois répétitions ont été effectuées pour chaque traitement.

Traitement : 4CI-IAA avec un taux d'épandage de 100 ml/m² pour une application de 0.6 g/m² avec 6% d'urée et deux applications de 0.3 g/m² avec 3% d'urée espacées d'une semaine.

Variable dépendante : Pourcentage de diminution des mauvaises herbes estimé après 28 jours à partir de relevés portant sur la présence ou l'absence de mauvaises herbes selon une grille d'observations de 100 points par mètre carré.

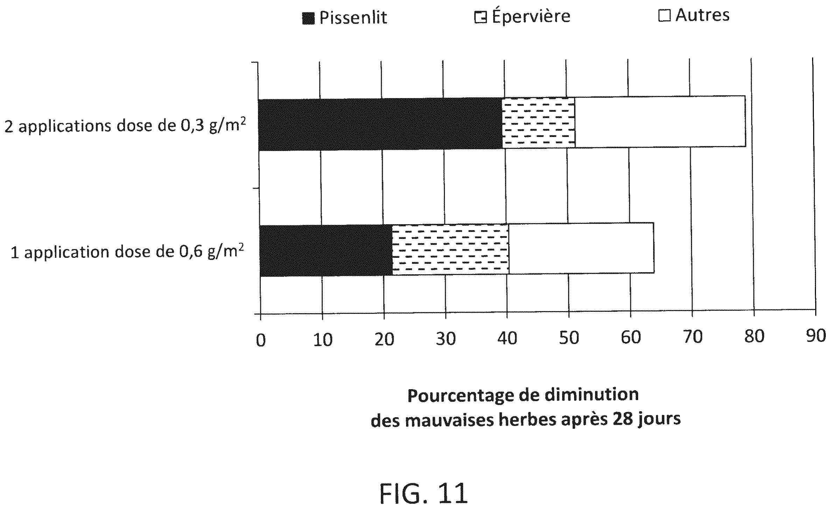

Les résultats sont présentés à la Figure 11.

### Interprétation

Disparition des mauvaises herbes = contrôle
Les deux stratégies d'application ont donné des pourcentages de diminution au dessus de 60% après 28 jours pour différents types de mauvaise herbe. La stratégie reposant sur deux applications a donné des résultats supérieurs, soit 79% vs 64%. De plus, le nombre d'applications affecte différemment les espèces et modifie les proportions des différentes mauvaises herbes ce qui peut avoir intérêt dans certaines situations.

## Revendications

1. Utilisation de l'acide 4-chloroindole-3-acétique (4CI-IAA) sous la forme d'un sel de potassium, un sel de sodium ou un sel d'aminé afin d'effectuer une éradication sélective d'au moins une mauvaise herbe choisie parmi le groupe constitué par bardane, chardon, épervière, léontodon, lupuline, pissenlit, plantain, potentille, trèfle et tussilage.

2. Utilisation selon la revendication 1, dans laquelle le 4 Cl-IAA, est présent dans une composition aqueuse dans une concentration variant de 1.5 g/L à 40 g/L.

3. Utilisation selon l'une quelconque des revendications **1** et **2**, dans lequel le 4 Cl-IAA est, en outre, utilisé en combinaison avec un agent chélateur.

4. Utilisation selon la revendication 3, dans lequel l'agent chélateur est choisi parmi *EDDS, EDTA, DTPA,* HEDTA, les sels de ceux-ci et des combinaisons de ceux-ci.

5. Utilisation selon l'une quelconque des revendications **1** à **4**, ladite utilisation étant faite à une dose supérieure ou égale à 0.005 g/plant et inférieure ou égale à 0.1 g/plant lors d'une application de type ciblé.

6. Utilisation selon l'une quelconque des revendications **1** à **4**, ladite utilisation étant faite à une dose supérieure ou égale à 0.01 g/plant et inférieure ou égale à 0.1 g/plant lors d'une application de type ciblé.

7. Utilisation selon l'une quelconque des revendications 1 à 4, ladite utilisation étant faite à une dose supérieure ou égale à 0.01 g/plant et inférieure ou égale à 0.05 g/plant lors d'une application de type ciblé.

8. Utilisation selon l'une quelconque des revendications **1** à **4**, ladite utilisation étant faite à une dose supérieure ou égale à 0.05 g/m² et inférieure ou égale à 1.0 g/m² lors d'une application de type épandage.

9. Utilisation selon l'une quelconque des revendications **1** à **4**, ladite utilisation étant faite à une dose supérieure ou égale à 0.1 g/m² et inférieure ou égale à 1.0 g/m² lors d'une application de type épandage.

10. Utilisation selon l'une quelconque des revendications **1** à **4**, ladite utilisation étant faite à une dose supérieure ou égale à 0.2 g/m² et inférieure ou égale à 0.8 g/m² lors d'une application de type épandage.

11. Utilisation d'une composition comprenant du 4 CI-IAA, sous la forme d'un sel de potassium, un sel de sodium ou un sel d'aminé, et un co-ingrédient, dans laquelle le 4 Cl-IAA est présent dans une concentration variant de 1.5 g/L à 40 g/L, afin d'effectuer une éradication sélective d'au moins une mauvaise herbe choisie parmi le groupe constitué par bardane, chardon, épervière, léontodon, lupuline, pissenlit, plantain, potentille, trèfle et tussilage.

12. Utilisation selon la revendication 11, dans laquelle ladite composition comprend en outre un surfactant, un agent chélateur, un agent de conservation, un tampon ou un quelconque mélange de ceux-ci.

13. Utilisation selon la revendication 11 ou 12, dans laquelle le co-ingrédient engendre des dommages apparents et rapides au niveau du feuillage et/ou d'une tige et/ou d'une fleur.

14. Utilisation selon la revendication 11 ou 12, dans laquelle le co-ingrédient engendre une surdose de nutriments, une toxicité métallique, un choc osmotique et/ou toute autre perturbation métabolique visible.

15. Utilisation selon l'une quelconque des revendications **1** à **14**, permettant ladite éradication sélective de ladite au moins une mauvaise herbe choisie parmi le groupe constitué par bardane, chardon, épervière, léontodon, lupuline, pissenlit, plantain, potentille, trèfle et tussilage, vis-à-vis d'une plante désirable du groupe des monocotylédones, notamment des graminées comme le gazon ou le blé.

## Patentansprüche

1. Verwendung von 4-Chlorindol-3-Essigsäure (4-Cl-IAA) in Form eines Kaliumsalzes, eines Natriumsalzes oder eines Aminsalzes, um eine selektive Ausrottung mindestens eines Unkrauts durchzuführen, das aus der Gruppe ausgewählt wird, die durch Klette, Distel, Habichtskraut, Katzenohr, Lupulin, Löwenzahn, Wegerich, Fingerkraut, Klee und Huflattich gebildet wird.

2. Verwendung nach Anspruch 1, wobei die 4-Cl-IAA in einer wässrigen Zusammensetzung in einer Konzentration vorhanden ist, die von 1,5 g/L bis 40 g/L variiert.

3. Verwendung nach einem der Ansprüche **1** und **2**, wobei die 4-Cl-IAA weiter in Kombination mit einem chelatbildenden Mittel verwendet wird.

4. Verwendung nach Anspruch 3, wobei das chelatbildende Mittel aus *EDDS, EDTA, DTPA, HEDTA,* deren Salzen und deren Kombinationen ausgewählt wird.

5. Verwendung nach einem der Ansprüche **1** bis **4**, wobei die Verwendung mit einer Dosis größer oder gleich 0,005 g/Pflanze und kleiner oder gleich 0,1 g/Pflanze bei einer Anwendung der gezielten Art erfolgt.

6. Verwendung nach einem der Ansprüche **1** bis **4**, wobei die Verwendung mit einer Dosis größer oder gleich 0,01 g/Pflanze und kleiner oder gleich 0,1 g/Pflanze bei einer Anwendung der gezielten Art erfolgt.

7. Verwendung nach einem der Ansprüche **1** bis **4**, wobei die Verwendung mit einer Dosis größer oder gleich 0,01 g/Pflanze und kleiner oder gleich 0,05 g/Pflanze bei einer Anwendung der gezielten Art erfolgt.

8. Verwendung nach einem der Ansprüche **1** bis **4**, wobei die Verwendung mit einer Dosis größer oder gleich 0,05 g/m² und kleiner oder gleich 1,0 g/m² bei einer Anwendung der Ausbringungsart erfolgt.

9. Verwendung nach einem der Ansprüche **1** bis **4**, wobei die Verwendung mit einer Dosis größer oder gleich 0,1 g/m² und kleiner oder gleich 1,0 g/m² bei einer Anwendung der Ausbringungsart erfolgt.

10. Verwendung nach einem der Ansprüche **1** bis **4**, wobei die Verwendung mit einer Dosis größer oder gleich 0,2 g/m² und kleiner oder gleich 0,8 g/m² bei einer Anwendung der Ausbringungsart erfolgt.

11. Verwendung einer Zusammensetzung, 4-C1-IAA umfassend, in Form eines Kaliumsalzes, eines Natriumsalzes oder eines Aminsalzes und einer weiteren Zutat, in der das 4-Cl-IAA in einer Konzentration vorhanden ist, die von 1,5 g/L bis 40 g/L variiert, um eine selektive Ausrottung mindestens eines Unkrauts durchzuführen, das aus der Gruppe ausgewählt wird, die durch Klette, Distel, Habichtskraut, Katzenohr, Lupulin, Löwenzahn, Wegerich, Fingerkraut, Klee und Huflattich gebildet wird.

12. Verwendung nach Anspruch 11, wobei die Zusammensetzung weiter ein oberflächenaktives Mittel, ein chelatbildendes Mittel, ein Konservierungsmittel, einen Puffer oder irgendeine Mischung derselben umfasst.

13. Verwendung nach Anspruch **11** oder **12**, wobei die weitere Zutat offensichtliche und rasche Schäden im Bereich der Blätter und/oder eines Stiels und/oder einer Blüte bewirkt.

14. Verwendung nach Anspruch 11 oder 12, wobei die weitere Zutat eine Überdosis an Nährstoffen, eine metallische Toxizität, einen osmotischen Schock und/oder jede andere sichtbare Stoffwechselstörung bewirkt.

15. Verwendung nach einem der Ansprüche **1** bis **14**, die die selektive Ausrottung des mindestens eines Unkrauts, das aus der Gruppe ausgewählt wird, die durch Klette, Distel, Habichtskraut, Katzenohr, Lupulin, Löwenzahn, Wegerich, Fingerkraut, Klee und Huflattich gebildet wird, gegenüber einer wünschenswerten Pflanze der Gruppe der Monokotyledonen, insbesondere der Gräser, wie Rasen oder Weizen ermöglicht.

## Claims

1. Use of 4-chloroindole-3-acetic acid (4Cl-IAA) in the form of a potassium salt, a sodium salt or an amine salt to selectively eradicate at least one weed selected from the group consisting of burdock, thistle, hawkweed, autumn hawkbit, lupulin, dandelion, plantain, potentilla, clover and coltsfoot.

2. Use according to claim 1, wherein the 4 Cl-IAA is present in an aqueous composition in a concentration varying from 1.5 g/L to 40 g/L.

3. Use according to any one of claims 1 and 2, wherein the 4 Cl-IAA is also used in combination with a chelating agent.

4. Use according to claim 3, wherein the chelating agent is selected from *EDDS, EDTA, DTPA, HEDTA,* the salts thereof and combinations thereof.

5. Use according to any one of claims 1 to 4, said use occurring at a dose greater than or equal to 0.005 g/plant and less than or equal to 0.1 g/plant for a targeted application.

6. Use according to any one of claims 1 to 4, said use occurring at a dose greater than or equal to 0.01 g/plant and less than or equal to 0.1 g/plant for a targeted application.

7. Use according to any one of claims 1 to 4, said use occurring at a dose greater than or equal to 0.01 g/plant and less than or equal to 0.05 g/plant for a targeted application.

8. Use according to any one of claims 1 to 4, said use occurring at a dose greater than or equal to 0.05 g/m² and less than or equal to 1.0 g/m² for a spreading application.

9. Use according to any one of claims 1 to 4, said use occurring at a dose greater than or equal to 0.1 g/m² and less than or equal to 1.0 g/m² for a spreading application.

10. Use according to any one of claims 1 to 4, said use occurring at a dose greater than or equal to 0.2 g/m² and less than or equal to 0.8 g/m² for a spreading application.

11. Use of a composition comprising 4Cl-IAA in the form of a potassium salt, a sodium salt or an amine salt, and a co-ingredient, wherein the 4CI-IAA is present in a concentration varying from 1.5 g/L to 40 g/L, to selectively eradicate at least one weed selected from the group consisting of burdock, thistle, hawkweed, autumn hawkbit, lupulin, dandelion, plantain, potentilla, clover and coltsfoot.

12. Use according to claim 11, wherein said composition further comprises a surfactant, a chelating agent, a preservative, a buffer or any mixture thereof.

13. Use according to claim 11 or 12, wherein the co-ingredient causes visible and rapid damage to the foliage and/or to a stem and/or to a flower.

14. Use according to claim 11 or 12, wherein the co-ingredient causes an overdose of nutrients, a metal toxicity, an osmotic shock and/or any other visible metabolic disruption.

15. Use according to any one of claims 1 to 14, allowing for said selective eradication of said at least one weed selected from the group consisting of burdock, thistle, hawkweed, autumn hawkbit, lupulin, dandelion, plantain, potentilla, clover and coltsfoot, relative to a desirable plant of the monocotyledonous group, in particular grasses such as turf or wheat.
